# EUROPÄISCHE PATENTSCHRIFT

(11) **EP 0 940 997 B1**
(45) Veröffentlichungstag und Bekanntmachung des Hinweises auf die Patenterteilung: **09.03.2005**
(21) Anmeldenummer: 99102365.6
(22) Anmeldetag: 06.02.1999
(51) Int. Cl.: H04Q 3/66, H04Q 11/04

(54) **Verfahren zur Verkehrslenkung in Telekommunikationsnetzen**
Method of traffic routing in telecommunication networks
Procédé de routage de trafic dans des réseaux de télécommunication

(30) Priorität: 04.03.1998 DE 19809044
(43) Veröffentlichungstag der Anmeldung: 08.09.1999
(73) Patentinhaber: Deutsche Telekom AG, 53113 Bonn (DE)
(72) Erfinder: Pinker, Gerold, 64285 Darmstadt (DE)

(56) Entgegenhaltungen:
- EP-A- 0 400 771
- EP-A- 0 535 857
- EP-A- 0 708 570
- ITU-T RECOMMENDATION Q.764, SIGNALLING SYSTEM NO. 7 - ISDN USER PART SIGNALLING PROCEDURES, März 1993 (1993-03), XP002160310

## Beschreibung

Die Erfindung betrifft ein Verfahren zur Verkehrslenkung in Telekommunikationsnetzen, insbesondere vermittelnden Telekommunikationsnetzen nach dem Oberbegriff des Patentanspruchs 1.

Ein derartiges Verfahren zur Verkehrslenkung, in dem die Vermittlung in Abhängigkeit beispielsweise einer Zielkennzahl, eines ISDN Preference Indicators (IPI) und eines Transmission Medium Requirements (TMR) erfolgt, ist aus der ITU-T Recommandation Q.764 (XP002160310) bekannt.

Vermittelnde Telekommunikationsnetze wie das öffentliche Telefonnetzwerk, auch Public Switched Telefon Network (PSTN/ISDN), sind seit längerem allgemein bekannt. Die an den Teilnehmervermittlungsstellen angebundenen Nutzer solcher öffentlicher Telefonnetzwerke werden in den nachfolgenden Vermittlungseinheiten, zum Beispiel Weiterverkehrsvermittlungsstelle, Netzübergangsvermittlungseinheit, Auslandsvermittlungseinheit, entsprechend der dort eingerichteten Verkehrslenkung mittels Routing-Tabellen in Abhängigkeit unter anderem einer Zielkennzahl, des zum Beispiel international verwendeten ISDN Preference Indicators und des Transmission Medium Requirements, weitervermittelt. Eine teilnehmerindividuelle Verkehrslenkung ist hierbei technisch nicht möglich, da weder eine spezielle Kennzeichnung des Teilnehmers auf der Ebene der Teilnehmervermittlungsstellen erfolgt noch auf höherer Netzebene eine individuelle Verkehrslenkungstabelle eingerichtet werden kann.

Der Erfindung liegt deshalb die Aufgabe zugrunde, ein Verfahren zur teilnehmerindividuellen Verkehrslenkung in Telekommunikationsnetzen, insbesondere vermittelnden Telekommunikationsnetzen, wie im öffentlichen Telefonnetzwerk, auch Public Switched Telephone Network genannt, zu schaffen, das in Abhängigkeit einer spezifischen Kundenkennung die teilnehmerindividuelle Verkehrslenkung in den nachfolgenden Vermittlungseinheiten höherer Netzebenen automatisch gesteuert vornimmt.

Die erfindungsgemäße Lösung der Aufgabe ist im Kennzeichen des Patentanspruchs 1 charakterisiert.

Weitere Lösungen bzw. Ausgestaltungen des Erfindungsgegenstands sind in den Kennzeichen der . Patentansprüche 2 bis 8 charakterisiert.

Durch die angegebenen Lösungen bzw. Ausgestaltungen des Erfindungsgegenstands kann bei Bedarf den an den Teilnehmervermittlungsstellen angebundenen Nutzern des jeweiligen vermittelnden Telekommunikationsnetzes in den nachfolgenden Vermittlungseinheiten eine teilnehmerindividuelle Verkehrslenkung in Abhängigkeit einer oder mehrerer Zielkennzahlen, insbesondere des ISDN-Preference Indicator- und des Transmission Medium Requirement-Wertes eingerichtet werden. Dadurch wird folgendes beispielsweise ermöglicht:
- eine Führung des Verkehrs nur über Kabelleitungen (Glasfaserleitungen) - unter Ausschluß von Satellitenverbindungen - mit einer höheren Übertragungsqualität, International Bit Error Rate genannt.
- Übertragungsstrecken mit DCME und den damit verbundenen Laufzeiten sowie Clipping können verhindert werden.
- Übertragungssysteme mit einer bestimmten Zeichengabe können ausgewählt werden.
- Es können Verbindungen bestimmter Carrier gewählt werden, unter anderem wegen der Ausprägung/Weiterentwicklung des ISDN User Part Zeichengabesystems Nr. 7.
- Die abgehenden Bündel können teilnehmerindividuell entsprechend ihrer Dimension und dem damit verbundenen Verlust ausgewählt werden.

Die Erreichbarkeit dieses Zieles kann durch den optionalen Rückfall auf die normale Verkehrslenkung auf das Niveau der normalen Verkehrsabwicklung gebracht werden.

Eine dynamische Belastung der digitalen Vermittlungseinheiten wird dadurch minimiert, daß nur bei Empfang der Ursprungskundenkennung entsprechend der Netzbetreiberspezifikation mit gesetztem A-Bit in die gesonderte teilnehmerindividuelle Verkehrslenkungstabelle verzweigt wird. Eine Ursprungskundenkennung ohne gesetztes A-Bit, jedoch mit der Kundenkennung, kann in der jeweiligen Teilnehmervermittlungsstelle gesonderten Teilnehmern zugeordnet werden. In den Vermittlungseinheiten der höheren Netzebene können diese Teilnehmer anhand der Kundenkennung eindeutig erkannt und für statistische Zwecke erfaßt werden.

Die Erfindung wird im folgenden anhand von in der Zeichnung dargestellten Ausführungsbeispielen näher beschrieben. In der Beschreibung, in den Patentansprüchen, der Zusammenfassung und in der Zeichnung werden die in der hinten angeführten Liste der Bezugszeichen verwendeten Begriffe und zugeordneten Bezugszeichen verwendet.

In der Zeichnung bedeuten:
- Fig. 1: die Nutzungsmöglichkeit einer teilnehmerindividuellen Verkehrslenkung, angewendet auf eine Weitverkehrsvermittlungsstelle;
- Fig. 2: zeigt die Möglichkeit einer teilnehmerindividuellen Verkehrslenkung, angewendet auf eine Netzübergangsvermittlungseinheit und
- Fig. 3: zeigt die Nutzungsmöglichkeit einer teilnehmerindividuellen Verkehrslenkung, angewendet auf eine Auslandsvermittlungseinheit.

Bevor die detaillierte Funktionsweise und Wirkungsweise des erfindungsgemäßen Verfahrens anhand von Ausführungsbeispielen erklärt wird, soll zunächst eine Beschreibung der grundsätzlichen Wirkungsweise des Verfahrens folgen.

Eine teilnehmerindividuelle Verkehrslenkung in den Vermittlungseinheiten der höheren Netzebenen wird dadurch erreicht, daß bei Bedarf dem Teilnehmeranschluß im jeweiligen öffentlichen Telefonnetzwerk in der Teilnehmervermittlungsstelle TVSt ein besonderer Parameter, nämlich die Ursprungskundenkennung NP.UKK gemäß Netzbetreiberspezifikation zugeordnet wird. Dieser Parameter beinhaltet:
- ein spezielles Bit (A-Bit) zur Kennzeichnung des Teilnehmers als sonderroutingberechtigt,
- eine binär codierte Kundenkennung (mindestens zwei Byte, mit der Möglichkeit zur Vergrößerung).

Der Parameter wird beim Verbindungsaufbau mittels der Initial Address Message IAM im ISDN User Part des Zeichengabesystems Nr.7 zu den nachfolgenden Vermittlungseinheiten WVSt, VE:N, VE:A übertragen.

Dem Teilnehmer kann alternativ die Ursprungskundenkennung NP.UKK der Netzbetreiberspezifikation, jedoch ohne gesetztes A-Bit zugeordnet werden. Dies geschieht zur Kennzeichnung des Teilnehmers als nicht sonderroutingberechtigt. In den digitalen Vermittlungseinheiten WVSt, VE:N, VE:A der höheren Netzebenen wird beim Empfang des Parameters und einem gesetzten A-Bit in gesonderte teilnehmerindivduelle Verkehrslenkungstabellen verzweigt. Das Sonderrouting erfolgt in Abhängigkeit der Kundenkennung und einer oder mehrerer Zielkennziffern, des ISDN-Preferece Indicators IPI und des Transmission Medium Requirements TMR. Es können mehrere Bündel zur Kennzeichnung der möglichen Abgangsbündel eingetragen werden. Wird die gewünschte Zielrufnummer nicht in der zugehörigen Zielkennziffer der teilnehmerindividuellen Verkehrslenkungstabelle gefunden, findet die bisher auch schon vorhandene normale Verkehrslenkungstabelle automatisch Anwendung. Soweit die kundenindividuelle Leitweglenkung nicht zum Erfolg führt, zum Beispiel weil kein freies Abgangsbündel gefunden wird, kann kundenindividuell und zielkennzahlabhängig eingerichtet werden, ob der Verbindungswunsch ausgelöst wird oder die normale Verkehrslenkungstabelle angewendet wird. Bei Belegung mittels der teilnehmerindividuellen Verkehrslenkung an den Auslandsvermittlungseinheiten VE:A wird die Verkehrsrückbildung (Quantifizierung) der normalen Verkehrslenkung nicht beeinflußt.

Beim Empfang des Parameters ohne gesetztes A-Bit wird in den digitalen Vermittlungseinheiten WVSt, VE:N, VE:A der höheren Netzebenen automatisch die normale Verkehrslenkung angewendet. Eine Übertragung des besonderen Parameters wird bei Netzübergang in das internationale Netz durch die VE:A oder das Zeichengabezwischennetz durch die VE:N unterdrückt, da es sich um einen nationalen Parameter handelt.

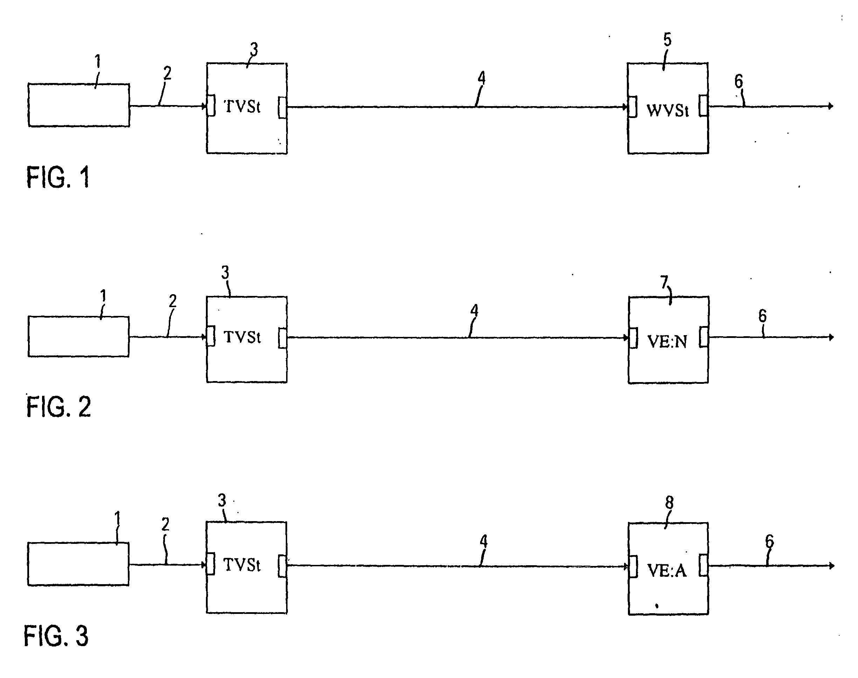

In Fig. 1 ist ein prinzipielles Beispiel angegeben, in dem ein Teilnehmer 1 über eine Leitung 2 mit einer Teilnehmervermittlungsstelle TVSt 3 verbunden, in der das Aufsetzen der Ursprungskundenkennung NP.UKK gemäß Netzbetreiberspezifikation, insbesondere Setzen des A-Bits und/oder der Kundenkennung erfolgt. Ausgangsseitig ist die Teilnehmervermittlungsstelle 3 mit einer Leitung 4 mit einer Weitverkehrsvermittlungsstelle (WVSt) 5 verbunden, die mit einer Leitung 6 verbunden ist, auf der das Ergebnis der Auswertung der Ursprungskundenkennung NP.UKK zwecks kundenindividueller Verkehrslenkung, über die Weitverkehrsvermittlungsstelle 5 weitergeleitet wird.

In Fig. 2 ist wiederum eine prinzipielle Schaltung zur Durchführung des Verfahrens gezeigt, bei der der Teilnehmer 1 über eine Leitung 2 mit einer Teilnehmervermittlungsstelle 3 verbunden ist. Hier erfolgt wiederum das Aufsetzen der Ursprungskundenkennung NP.UKK gemäß Netzbetreiberspezifikation wie bereits in Verbindung mit Fig. 1 beschrieben. Zum Unterschied des Beispiels nach Fig. 1 ist die Teilnehmervermittlungsstelle 3 in diesem Ausführungsbeispiel über die Leitung 4 mit einer Netzübergangsvermittlungseinheit (VE:N) 7 verbunden. Hier erfolgt die Auswertung ebenfalls wie bereits in Verbindung mit Fig. 1 beschrieben.

In Fig. 3 ist ein weiteres Ausführungsbeispiel dargestellt, in dem ein Teilnehmer 1 über eine Leitung 2 wiederum mit einer Teilnehmervermittlungsstelle 3 verbunden. Auch hier erfolgt wiederum das Aufsetzen der Ursprungskundenkennung NP.UKK gemäß Netzbetreiberspezifikation wie in Verbindung mit Fig. 1 beschrieben. Die Teilnehmervermittlungsstelle 3 ist mit der Leitung 4 mit einer Auslandsyermittlungseinheit (VE:A) 8 verbunden. In dieser Auslandsvermittlungseinheit 8 erfolgt die Auswertung der Ursprungskundenkennung NP.UKK und danach über Leitung 6 die kundenindividuelle Verkehrslenkung.

Das teilnehmerindividuelle Routing ermöglicht es beispielsweise Kunden, Videokonferenzen basierend auf Kanalbündelung mit 6 x 64 kBit/s-Datenübertragung, über einen Auslandscarrier aufzubauen. In einer Multicarrierumgebung, zum Beispiel bei Verbindungen nach Japan oder USA, kann somit die normalerweise stattfindende Verkehrsrückbildung und damit die Verteilung von sechs Kanälen auf mehrere Carrier verhindert werden. Hierdurch werden Laufzeitunterschiede verhindert, die sonst Videokonferenzen teilweise unmöglich machen. Das teilnehmerindividuelle Routing schafft auch Prüfmöglichkeiten für vermittlungsanlagenspezifische Störungssuche bei Kundenbeschwerden. Hierdurch können definierte Verbindungswege von der Teilnehmervermittlungsstelle 3 über die Weiterverkehrsvermittlungsstelle 5 zu den Netzübergangsvermittlungseinheiten 7 oder den Auslandsvermittlungseinheiten 8 aufgebaut werden. Eine Fehlereingrenzung auf eine Vermittlungseinheit eines bestimmten Herstellertyps wird hierdurch möglich, so daß die Fehlerbehebung schneller erfolgen kann. Weiterhin können gezielt end-to-end Tests mit dem Ausland durchgeführt werden, ohne das Pseudokennziffern verwendet werden müssen, die auch von Normalteilnehmern gewählt werden können. Durch das teilnehmerindividuelle Routing können ausgewählte Kunden ihren Auslandsverkehr mittels der normalen Zielrufnummer über gesonderte Carrier abwickeln, jedoch abweichend von der normalen Verkehrslenkung.

### Liste der Bezugszeichen

- 1: Teilnehmer
- 2: Leitung
- 3: Teilnehmervermittlungsstellen (TVSt)
- 4: Leitung
- 5: Weiterverkehrsvermittlungsstellen (WVSt)
- 7: Netzübergangsvermittlungseinheiten (VE:N)
- 8: Auslandsvermittlungseinheiten (VE:A)

## Patentansprüche

1. Verfahren zur Verkehrslenkung in vermittelnden Telekommunikationsnetzen (PSTN/ISDN), in denen über Teilnehmervermittlungsstellen (TVSt) angebundene Nutzer in nachfolgenden Vermittlungseinheiten wie Weitverkehrsvermittlungsstellen (WVSt), Netzübergangsvermittlungseinheiten (VE:N) und Auslandsvermittlungseinheiten (VE:A) entsprechend der dort eingerichteten Verkehrslenkung in Form von gespeicherten Routing-Tabellen in Abhängigkeit unter anderem einer Zielkennzahl, des ISDN Preference Indicators (IPI) und des Transmission Medium Requirements (TMR) weitervermittelt werden, **dadurch gekennzeichnet,**
**dass** die Verkehrslenkung in den Vermittlungseinheiten (5, 7, 8) der höheren Netzebenen teilnehmerindividuell erfolgt,
**dass** bei Bedarf jedem, einem Nutzer zugeordneten Teilnehmeranschluss in den Teilnehmervermittlungsstellen (3) ein Parameter für die Ursprungskundenkennung (NP.UKK) zugeordnet wird,
**dass** dieser Parameter ein spezielles Bit (A-Bit) zur Kennzeichnung eines Teilnehmers als sonderroutingberechtigt enthält,
**dass** dieser Parameter außerdem eine binär codierte Kundenkennung enthält,
**dass** dieser Parameter beim Verbindungsaufbau mittels einer besonderen Adressnachricht, zum Beispiel eine Initial Address Message im ISDN User Part des Zeichengabesystems Nr. 7, zu den nachfolgenden Vermittlungseinheiten 5, 7, 8) übertragen wird,
**dass** beim Empfang des Parameters in diesen Vermittlungseinheiten (5, 7, 8) der höheren Netzebenen in gesonderte bzw. besondere teilnehmerindividuelle Verkehrslenkungstabellen verzweigt wird, und
**dass** danach automatisch ein Sonderrouting in Abhängigkeit der Kundenkennung, einer oder mehrerer Zielkennziffern, zum Beispiel des ISDN Preference Indicators (IPI) und des Transmission Medium Requirements (TMR), erfolgt.

2. Verfahren nach Patentanspruch 1, **dadurch gekennzeichnet,**
**daß** der Parameter beim Verbindungsaufbau mittels einer Initialadressennachricht (IAM), die der Initial Address Message im ISDN User Part des Zeichengabesystems Nr. 7 (ISUP des ZGS Nr. 7) entspricht, zu den nachfolgenden Vermittlungseinheiten der höheren Ebene (5, 7, 8) übertragen wird.

3. Verfahren nach Patentanspruch 1, **dadurch gekennzeichnet,**
**daß** der Parameter (NP.UKK) mit Kundenkennung, jedoch ohne ein gesetztes Bit (A-Bit) einem Teilnehmer (1) zugeordnet wird, wodurch der Teilnehmer (1) von den Vermittlungseinheiten (5, 7, 8) als nicht sonderroutingberechtigt automatisch erkannt wird.

4. Verfahren nach einem der Patentansprüche 1 bis 3, **dadurch gekennzeichnet,**
**daß** mehrere Bündel zur Kennzeichnung der möglichen Abgangsbündel eingetragen werden,
**daß** beim Nichtfinden der gewünschten Zielrufnummer in der zugehörigen Zielkennziffer der . teilnehmerindividuellen Verkehrslenkungstabelle automatisch die normale Verkehrslenkungstabelle aktiviert wird.

5. Verfahren nach einem der Patentansprüche 1 bis 4, **dadurch gekennzeichnet,**
**daß** die kundenindividuelle Leitweg-, bzw. Verkehrslenkung im Falle einer nicht erfolgreichen Operation kundenindividuell und zielkennzahlabhängig eingerichtet wird und daß in diesem Fall automatisch gesteuert entschieden wird, ob der Verbindungswunsch ausgelöst oder die normale Verkehrslenkungstabelle angewendet wird.

6. Verfahren nach einem der Patentansprüche 1 oder 2, **dadurch gekennzeichnet,**
**daß** beim Empfang eines Parameters für die Ursprungskundenkennung (NP.UKK) ohne gesetztes erstes Bit (A-Bit) in den digitalen Vermittlungseinheiten (5, 7, 8) der höheren Netzebenen automatisch die normale Verkehrslenkung erfolgt.

7. Verfahren nach einem der Patentansprüche 1 bis 6, **dadurch gekennzeichnet,**
**daß** bei einer Übertragung des Parameters beim Netzübergang in das internationale Netz (8) oder das Zeichengabezwischennetz (7) der Parameter als nationaler Parameter erkannt und unterdrückt wird.

8. Verfahren nach einem der Patentansprüche 1 bis 7, **dadurch gekennzeichnet,**
**daß** die in der Ursprungskundenkennung (NP.UKK) vorhandene binär codierte Kundenkennung mindestens zwei Byte mit Vergrößerungsmöglichkeit umfaßt.

## Claims

1. Method for traffic routing in switching telecommunications networks (PSTN/ISDN), wherein users connected via subscriber exchanges (TVSt) are onward-switched in following switching units such as long-distance exchanges (WVSt), network transition switching units (VE:N) and international switching units (VE:A) according to the therein established traffic routing in the form of stored routing tables as a function of, among other things, a destination code number, the ISDN preference indicator (IPI) and the transmission medium requirements (TMR), **characterized in that**
the traffic routing in the switching units (5, 7, 8) of the higher network levels is effected on a subscriber-specific basis;
where necessary, each subscriber line assigned to a user is associated in the subscriber exchanges (3) with a parameter for the originating customer code (NP.UKK);
said parameter contains a special bit (A-bit) for identifying a subscriber as having special routing authorization;
said parameter additionally contains a binary-coded customer code;
during call setup, said parameter is transmitted by means of a special address message, such as an initial address message in the ISDN user part of the signalling system No. 7, to the following switching units (5, 7, 8);
when the parameter is received in said switching units (5, 7, 8) of the higher network levels, a branch is made to separate or special subscriber-specific traffic routing tables; and
thereafter a special routing is automatically effected as a function of the customer code, one or more destination code numbers, such as the ISDN preference indicator (IPI) and the transmission medium requirements (TMR).

2. Method according to claim 1, **characterized in that**
during call setup, the parameter is transmitted by means of an initial address message (IAM), corresponding to the initial address message in the ISDN user part of the signalling system No. 7 (ISUP of signalling system No. 7), to the following switching units of the higher level (5, 7, 8).

3. Method according to claim 1, **characterized in that**
the parameter (NP.UKK) with customer code, but without a set bit (A-bit) is associated with a subscriber (1), whereby the subscriber (1) is automatically recognized by the switching units (5, 7, 8) as not having special routing authorization.

4. Method according to any one of claims 1 to 3, **characterized in that**
a plurality of trunk groups is entered for identification of the possible outgoing trunk groups;
if the desired destination call number is not found in the corresponding destination code number of the subscriber-specific traffic routing table, the normal traffic routing table is automatically activated.

5. Method according to any one of claims 1 to 4, **characterized in that**
in the case of a non-successful operation, the customer-specific traffic routing is set up on a customer-specific and destination-code-number-dependent basis and, in this case, it is decided under automatic control whether the call request is cleared down or whether the normal traffic routing table is used.

6. Method according to any one of claim 1 or 2, **characterized in that**
if a parameter for the originating customer code (NP.UKK) is received without a set first bit (A-bit), the normal traffic routing is automatically effected in the digital switching units (5, 7, 8) of the higher network levels.

7. Method according to any one of claims 1 to 6, **characterized in that**
if the parameter is transmitted upon network transition to the international network (8) or the intermediate signalling network (7), the parameter is recognized as a national parameter and is suppressed.

8. Method according to any one of claims 1 to 7, **characterized in that**
the binary-coded customer code contained in the originating customer code (NP.UKK) comprises at least two bytes with the possibility of an increase.

## Revendications

1. Procédé de routage dans des réseaux commutés de télécommunications (RTPC/RNIS), dans lesquels des utilisateurs raccordés par des centraux d'abonnés sont reroutés sur des unités de commutation en aval du type central longue distance, unité de commutation inter-réseau et unité de commutation internationale, selon le routage y installé sous forme de tableaux de routage mémorisés, en fonction entre autres d'un indicatif d'abonné, du ISDN Preference Indicator (IPI) et du Transmission Médium Requirement (TMR), **caractérisé en ce que**
dans les unités de commutation (5, 7, 8) des niveaux de réseau supérieurs, le routage se fait individuellement par abonné,
- en cas de besoin - on affecte dans les centraux d'abonnés (3) à chaque abonnement correspondant à un utilisateur, un paramètre comme indicatif client d'origine (NP.UKK),
ce paramètre comprend un bit spécifique (bit A) pour caractériser un abonné comme autorisé pour le routage spécifique,
ce paramètre comprend également un indicatif client à codage binaire,
ce paramètre sera transmis lors de l'établissement de la liaison vers les unités de commutation en aval (5, 7,8) par un message d'adresse particulier, comme p.ex. un message initial d'adresse dans le sous-système utilisateur RNIS du système de signalisation no. 7,
à la réception de ce paramètre dans ces unités de commutation (5, 7, 8) des niveaux de réseau supérieurs, une distribution a lieu sur des tableaux de routage séparés ou spéciaux, individuels par abonné et
un routage spécial se fait ensuite automatiquement en fonction de l'indicatif client, d'un ou plusieurs indicatifs d'abonné, comme p.ex. du ISDN Preference Indicator (IPI) et du Transmission Medium Requirement (TMR).

2. Procédé selon la revendication 1, **caractérisé en ce que**
le paramètre est transmis lors de l'établissement de la liaison par un message initial d'adresse (lAM) correspondant au message initial d'adresse du sous-ensemble utilisateur RNIS du système de signalisation no. 7 vers les unités de commutation en aval du niveau supérieur (5, 7, 8).

3. Procédé selon la revendication 1, **caractérisé en ce que**
le paramètre (NP.UKK) avec indicatif client, mais sans bit activé (bit A), est affecté à un abonné (1), ce qui signalera automatiquement l'abonné (1) aux unités de commutation comme non-autorisé pour le routage spécifique.

4. Procédé selon l'une des revendications 1 à 3, **caractérisé en ce que**
plusieurs faisceaux sont enregistrés pour la désignation des faisceaux de départ éventuels,
le tableau de routage normal sera activé automatiquement, si le numéro d'abonné souhaité n'est pas trouvé dans l'indicatif d'abonné correspondant du tableau de routage individuel par abonné.

5. Procédé selon l'une des revendications 1 à 4, **caractérisé en ce que**
si une opération n'a pas réussi, le choix de la voie d'acheminement ou le routage individuel par client a lieu individuellement par client et en fonction de l'indicatif d'abonné, et dans ce cas il est décidé par c automatique si la liaison souhaitée est déclenchée ou si le tableau de routage normal est appliqué.

6. Procédé selon l'une des revendications 1 ou 2, **caractérisé en ce que**
à la réception d'un paramètre pour l'indicatif client d'origine sans premier bit activé (bit A), le routage normal a lieu automatiquement dans les unités de commande numériques (5, 7, 8) des niveaux de réseau supérieurs.

7. Procédé selon l'une des revendications 1 à 6, **caractérisé en ce que**
lorsque le paramètre est transmis lors du passage vers le réseau international (8) ou vers le réseau intermédiaire de signalisation (7), le paramètre est identifié comme paramètre national et supprimé.

8. Procédé selon l'une des revendications 1 à 7, **caractérisé en ce que**
l'indicatif client à codage linéaire compris dans l'indicatif client d'origine (NP.UKK) est d'au moins deux octets, avec élargissement possible.
